# EUROPEAN PATENT APPLICATION

(11) **EP 2 308 282 A1**
(43) Date of publication of application: **13.04.2011**
(21) Application number: 10187189.5
(22) Date of filing: 11.10.2010
(51) Int. Cl.: A01G 5/06, A01G 7/06

(54) **Method for colouring a flower on a pot plant, and pot plant with coloured flower**

(30) Priority: 12.10.2009 NL 2003621
(71) Applicant: Logico B.V., 2675 LN Honselersdijk (NL); R.C.G. de Koning Holding B.V., 2675 LW Honselersdijk (NL)
(72) Inventor: Van den Berghen, Jeffrey Franciscus, 2671 NT, Naaldwijk (NL)
(74) Representative: Dokter, Hendrik Daniel

(57) **Abstract**

Method for colouring a flower (3) on a pot plant (1), comprising the steps of (i) providing a pipette (8), (ii) arranging in the stem (2) of the flower (3) a bore (6) with a diameter corresponding to the diameter of the outer end (7) of the pipette (8), (iii) inserting the outer end (7) of the pipette (8) into the bore (6) and fixing the pipette (8) relative to the stem (2), (iv) filling the pipette (8) with a quantity of colouring liquid (9), which is non-toxic to the pot plant (1), following any of the steps (i), (ii) or (iii) as desired, and (v) removing the pipette (8) after the quantity of colouring liquid (9) has been taken up by the pot plant (1), and pot plant (1) with at least one flower (3) which is coloured with a colouring liquid (9) introduced via the stem (2) of this flower (3).

## Description

The invention relates to a method for colouring a flower on a pot plant.

It is known to colour cut flowers by placing a cut branch in water in which a dye has been dissolved or by spraying flowers with a paint substance.

It is further known to colour the flowers of a pot plant by dissolving a dye in water which is then poured onto the soil around the roots of the plant and is taken up by the roots.

These known methods have the drawback that they are undesirable for logistical reasons (placing cut branches in a dye solution), produce an aesthetically unsatisfactory result (spraying with a paint substance) or have a low efficiency (administering a dye solution around the roots).

Known from WO 93/02546 is a method for introducing liquids, such as pesticides, fungicides, nutrients, water, flavorants, odorants, colorants or suitable solutions of such materials into a plant. In order to perform the known method a device is provided which comprises a liquid reservoir and spikes connected thereto via a manifold, which spikes, which are each provided with a T-shaped passageway, are pressed into the stem or trunk of a plant or tree in a manner such that the transverse parts of the T-shaped passageway debouch into the xylem system of the plant or tree. After arranging the spikes in the plant stem or tree trunk the apparatus is attached to the plant or tree, and liquid is admitted from the reservoir into the xylem system of the plant via the passages in the respective spikes.

The known device is relatively heavy, has a complex construction and, as a result of this complexity, is expensive to produce and is for these reasons unsuitable for use to colour the flowers on a pot plant.

It is an object of the invention to provide a method for colouring a flower on a pot plant which can be performed in relatively simple manner, wherein a dye is administered with a high efficiency and which can be performed at relatively low cost without the use of complex equipment.

This object is achieved, and other advantages gained, with a method which according to the invention comprises the steps of (i) providing a pipette, (ii) arranging in the stem of the flower a bore with a diameter corresponding to the outer diameter of the outer end of the pipette, (iii) inserting the outer end of the pipette into the bore and fixing the pipette relative to the stem, (iv) filling the pipette with a quantity of colouring liquid, which is non-toxic to the pot plant, following any of the steps (i), (ii) or (iii) as desired, and (v) removing the pipette after the quantity of colouring liquid has been taken up by the pot plant.

Thus colouring the flower of a pot plant according to this method has the advantage over the known method that use is made of commercially available pipettes instead of a complicated apparatus developed for this purpose.

It has moreover been found that, in order to fix the pipette relative to the stem as according to step (iii), it suffices in practical situations to insert the pipette with its outer end in the arranged bore. Because the diameter of the bore corresponds to the outer diameter of the outer end of the pipette, and the stem of the flower provides sufficient depth and strength, a pipette with its outer end inserted into the bore remains in place without additional measures being required for this purpose.

The step (ii) of arranging a bore is preferably preceded by administering water to the plant.

The colouring liquid is taken up spontaneously by the flower by means of the rising sap flow in the flower stem, wherein a period of at least 8 hours, preferably about 12 hours, suffices to allow the flower to take up as much colouring liquid that it takes on the desired colour.

Any dye which is non-toxic for the pot plant and watersoluble can in principle be applied.

In an exemplary embodiment of a method according to the invention the colouring liquid comprises an organic dye.

The organic dye comprises for instance a triphenylmethane dye.

The method is in principle suitable for application to numerous pot plants, but is particularly suitable for colouring the flower on a pot plant selected from the group of plant genera comprising phalaenopsis, anthurium and spatyfillum.

The invention also relates to a pot plant with at least one flower which is coloured with a colouring liquid introduced via the stem of this flower, which pot plant is for instance selected from the group of plant genera comprising phalaenopsis, anthurium and spatyfillum.

The invention will be elucidated hereinbelow on the basis of an exemplary embodiment, with reference to the drawings.

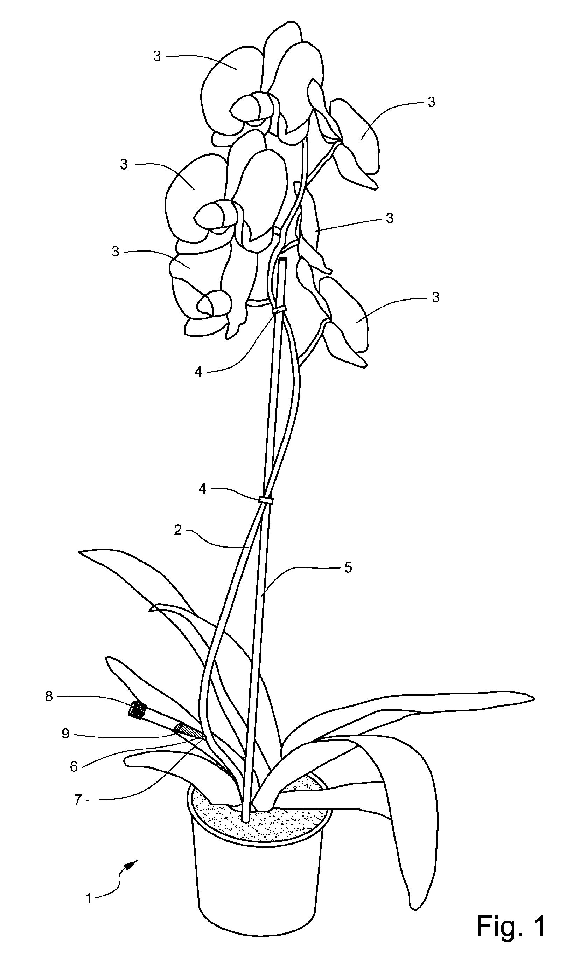

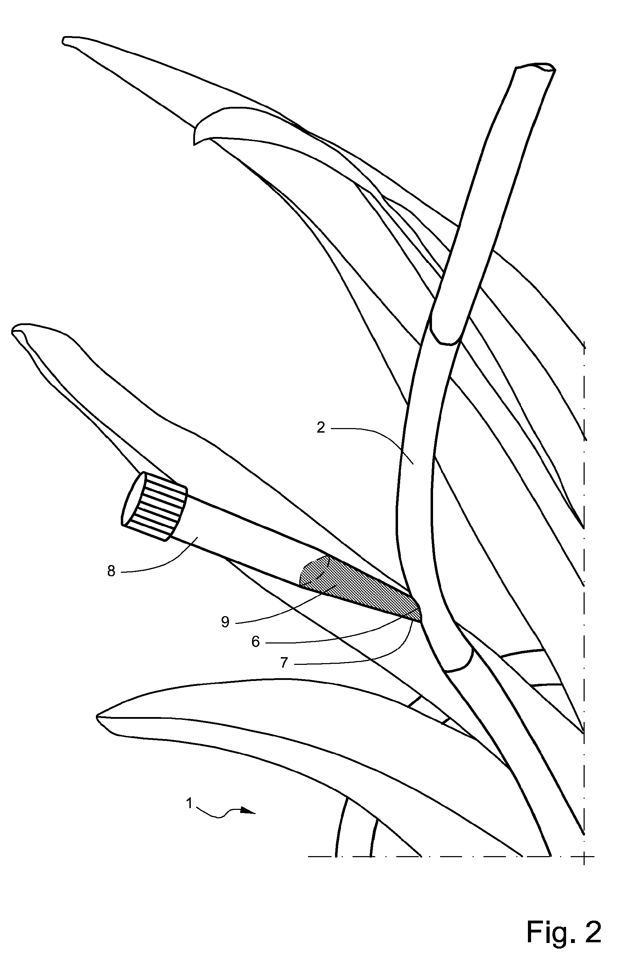

In the drawings, fig. 1 shows a perspective view of a pot 1 with a white phalaenopsis with a flower stem 2 and flowers 3. Using an adhesive strip 4 stem 2 is adhered at two locations to a pin 5 placed in the pot. After the plant has been given sufficient water, which has been drawn up by the plant, a hole 6 is drilled into the lower side of stem 2 (shown in detail in fig. 2), into which is inserted the outer end 7 of a pipette 8 filled with colouring liquid 9 comprising blue triphenylmethane dye. Pipette 8 is not attached to pin 5 but hangs completely freely with its outer end 7 in flower stem 2 and, after the colouring liquid has been taken up, can be removed in simple manner with a rotating and pulling movement. It has been found that after a period of about 12 hours, in which the colouring liquid is taken up, flowers 3 take on a blue appearance in the centre and along the edges.

## Claims

1. Method for colouring a flower (3) on a pot plant (1), comprising the steps of
(i) providing a pipette (8),
(ii) arranging in the stem (2) of the flower (3) a bore (6) with a diameter corresponding to the diameter of the outer end (7) of the pipette (8),
(iii) inserting the outer end (7) of the pipette (8) into the bore (6) and fixing the pipette (8) relative to the stem (2),
(iv) filling the pipette (8) with a quantity of colouring liquid (9), which is non-toxic to the pot plant (1), following any of the steps (i), (ii) or (iii) as desired, and
(v) removing the pipette (8) after the quantity of colouring liquid (9) has been taken up by the pot plant (1).

2. Method as claimed in claim 1, **characterized in that** the step (ii) of arranging a bore is preceded by administering water to the plant.

3. Method as claimed in claims 1-2, **characterized in that** the removal step (v) is performed after a period of at least 8 hours, during which the pipette filled with the colouring liquid has been inserted with its outer end in the bore.

4. Method as claimed in claim 3, **characterized in that** the period amounts to about 12 hours.

5. Method as claimed in any of the claims 1-4, wherein the colouring liquid (9) comprises an organic dye.

6. Method as claimed in claim 5, wherein the organic dye comprises a triphenylmethane dye.

7. Method as claimed in claim 6, wherein the triphenylmethane dye is a blue dye.

8. Method as claimed in claims 1-2, wherein the pot plant (1) is selected from the group of plant genera comprising phalaenopsis, anthurium and spatyfillum.

9. Pot plant (1) with at least one flower (3) which is coloured with a colouring liquid (9) introduced via the stem (2) of this flower (3).

10. Pot plant (1) as claimed in claim 9, selected from the group of plant genera comprising phalaenopsis, anthurium and spatyfillum.
